# EUROPÄISCHE PATENTSCHRIFT

(11) **EP 3 193 272 B1**
(45) Veröffentlichungstag und Bekanntmachung des Hinweises auf die Patenterteilung: **24.03.2021**
(21) Anmeldenummer: 17150112.5
(22) Anmeldetag: 03.01.2017
(51) Int. Cl.: B29C 64/393, G06F 30/00

(54) **VERFAHREN ZUM HERSTELLEN EINER POLSTERUNG**
METHOD FOR MANUFACTURING OF PACKAGE CUSHIONING
PROCÉDÉ DE PRODUCTION D'UN REMBOURRAGE

(30) Priorität: 05.01.2016 DE 102016100133
(43) Veröffentlichungstag der Anmeldung: 19.07.2017
(73) Patentinhaber: Deutsche Post AG, 53113 Bonn (DE)
(72) Erfinder: Langer, Frank, 53844 Troisdorf (DE); Schneebeck, Holger, 50939 Köln (DE); Unterberg, Patrick, 58452 Witten (DE)
(74) Vertreter: Michalski Hüttermann & Partner Patentanwälte mbB

(56) Entgegenhaltungen:
- US-A1- 2001 017 023
- US-A1- 2005 055 181
- LYE S W ET AL: "Virtual design and testing of protective packaging buffers", COMPUTERS IN INDU, ELSEVIER, AMSTERDAM, NL, Bd. 54, Nr. 2, Juni 2004 (2004-06), Seiten 209-221, XP004503213, ISSN: 0166-3615, DOI: 10.1016/J.COMPIND.2003.01.001
- CHUCHOM SOMCHAI ET AL: "AN INTEGRATED DESIGN APPROACH FOR PROTECTIVE PACKAGING", INTEGRATED MANUFACTURING SYS, IFS PUBLICATIONS, KEMPSTON, GB, Bd. 11, Nr. 5, 2000, Seiten 321-330, XP009084533, ISSN: 0957-6061, DOI: 10.1108/09576060010335591
- Anonymous: "3D scanner - Wikipedia", , 24. Dezember 2010 (2010-12-24), XP055335617, Gefunden im Internet: URL:https://en.wikipedia.org/w/index.php?t itle=3D_scanner&oldid=403960178#Triangulat ion [gefunden am 2017-01-16]

## Beschreibung

Die Erfindung betrifft ein Verfahren zum Herstellen einer Polsterung zum Transportieren eines Stückguts in einer Umverpackung, mit dem durch einen Computer, einen 3D-Scanner und/oder eine Polsterungsmaschine ausgeführten Schritt: Erhalten von 3D-Daten eines 3D-CAD-Modells und Materialdaten für jedes Stückgut durch Übertragen aus einer Datenbank und/oder durch dreidimensionales Scannen des Stückguts mittels des 3D-Scanners

Zum Beispiel offenbart US2005055181A1 ein Verfahren für eine Bestimmung des Verpackungsdesigns eines Behälters unter Verwendung von 3D-CAD-Modellen.

Beim Zusammenstellen und anschließendem Verpacken von Gütern in einem Lager wird in der Regel eine Verpackungsstrategie angewendet, die darauf abzielt, standarisierte Verpackungsgrößen, wie beispielsweise Pakete oder Paletten, zu befüllen. Die einzelnen Stückgüter werden in eine Umverpackung eingelegt und mit einer oftmals aus Füllmaterial bestehenden Polsterung aufgefüllt. Das verwendete Füllmaterial ist in der Regel loses Material wie Kunststoffkugeln, Stroh oder Papierballen, um ein in der Umverpackung ungenutzte Volumen gleichmäßig auszufüllen. Durch das Füllmaterial werden die Stückgüter in der Umverpackung gepolstert und fixiert, um Beschädigungen derselben während des Transports zu vermeiden. Alternativ oder zusätzlich kann angepasstes, individuelles Füllmaterial verwendet werden, welches in der Regel jedoch nur bei Umverpackungen von Einzelgütern und Verkaufseinheiten verwendet und direkt beim Produzenten erstellt wird.

Während des Transports werden trotz allem viele Güter aufgrund unzureichender oder fehlender Polsterung beschädigt und in der Folge retourniert. Eine wesentliche Ursache liegt in der standardisierten Polsterung, die nicht an die jeweiligen Transportanforderungen der Güter angepasst ist. Besondere Schwierigkeiten ergeben sich bei der Zusammenlegung von zerbrechlichen und schweren Gütern in einem Paket. Denn heutige Prozesse eines Warenhauses bzw. Fulfillment-Centers erlauben es oftmals nicht, aufgrund der Geschwindigkeit der Kommissionierung beim Zusammenstellen der Güter individuell auf die jeweiligen Güter oder deren Zusammenlegung in einem Paket einzugehen.

Ausgehend von dieser Situation ist es eine Aufgabe der Erfindung, ein Verfahren anzugeben, um in besonders einfacher Weise und individuell eine Polsterung zum Transportieren eines Stückguts in einer Umverpackung zu erstellen.

Die Aufgabe wird durch die Merkmale des unabhängigen Anspruchs gelöst. Vorteilhafte Ausgestaltungen sind in den Unteransprüchen wiedergegeben.

Demnach wird die Aufgabe durch ein Verfahren zum Herstellen einer Polsterung zum Transportieren eines Stückguts in einer Umverpackung gelöst, mit durch einen Computer, einen 3D-Scanner und/oder eine Polsterungsmaschine ausgeführten Schritten:
b) Erhalten von 3D-Daten eines 3D-CAD-Modells und Materialdaten für jedes Stückgut durch Übertragen aus einer Datenbank und/oder durch dreidimensionales Scannen des Stückguts mittels des 3D-Scanners,
c) Einsortieren des Stückguts mittels eines ersten neuronalen Netzes in eine sofern bereits bestehende Transportkategorie oder anderseits in eine zu erstellende Transportkategorie, wobei eine Kategorisierung durch das erste neuronale Netzwerk anhand der 3D-Daten und der Materialdaten erfolgt,
d) Gruppieren des Stückguts in eine Stückgutgruppe anhand der Transportkategorie und/oder einer Stückgut-ID,
e) Virtuelles Anordnen der Stückgutgruppe in der Umverpackung,
f) Auswählen eines 3D-CAD-Modells einer Polsterungsvorlage für die Stückgutgruppe mittels eines zweiten neuronalen Netzes anhand der Transportkategorie und der virtuellen Anordnung,
g) Berechnen einer Differenz, eines Schnitts und/oder einer Vereinigung zwischen der virtuellen Anordnung der Stückgutgruppe in dem ausgewählten 3D-CAD-Modell der Polsterungsvorlage, dem 3D-CAD-Modells des Stückguts sowie Koordinaten und Ausrichtung des 3D-CAD-Modells des Stückguts und dem 3D-CAD-Modell der ausgewählten Polsterungsvorlage als 3D-CAD-Modell einer virtuellen Polsterung,
n) Herstellen der Polsterung aus dem 3D-CAD-Modell der virtuellen Polsterung mittels der Polsterungsmaschine.

Durch das Verfahren wird ein ganz neuer Ansatz vorgeschlagen, um in Abhängigkeit individueller Transportanforderungen eine Polsterung zum Verpacken und Konsolidieren von zu verschickenden Stückgütern herzustellen. Mittels der neuronalen Netze wird einerseits eine automatische Bewertung der Transportanforderungen für das jeweilige Stückgut und andererseits eine Auswahl sowie Erstellung einer dazu passenden, individuellen Polsterung bewirkt. Durch die derart individuell an das Stückgut oder eine Mehrzahl von Stückgütern angepasste Polsterung werden Beschädigungen beim Transport und Retouren deutlich reduziert und somit weniger Abfall und Ausschuss erzeugt. Gerade bei wertvollen Stückgütern ist die Reduzierung der Retouren von großer wirtschaftlicher Relevanz. Zudem erlaubt das vorgeschlagene Verfahren individuell auf Kundenwünsche einzugehen und eine Konfektionierung der Stückgüter mit Hilfe der Polsterung durch Struktur, Ästhetik und Anordnung zu veredeln. Ferner führt die individuelle Anpassung der Polsterung an die Transportanforderungen und dadurch erreichte Fixierung des Stückguts dazu, dass im Gegensatz zu aus dem Stand der Technik bekannten Verfahren nicht das gesamte ungenutzte Volumen in der Umverpackung mit weiterem Füllmaterial aufgefüllt werden muss, was den Verbrauch von Füllmaterial insgesamt reduziert. Schließlich können auch wiederverwertbare Materialien wie Zellulose oder Stärke zum umweltschonenden Herstellen der Polsterung verwendet werden.

Grundsätzlich lässt sich durch das Verfahren eine Polsterung für ein einzelnes sowie eine Mehrzahl in einer gemeinsamen Umverpackung verschickte Stückgüter sowie für jede Art von Stückgut erstellen. Das Stückgut kann beispielsweise ein Gebinde, Lebensmittel oder Schuhe, aber auch Kisten, beladene Paletten, Maschinen oder Anlagenteile, Kabel-, Papier- oder Blechrollen und Fässer darstellen und grundsätzlich eine beliebige Form aufweisen. Die synonyme internationale Bezeichnung für Stückgut ist Kollo, wobei das Stückgut ebenso ein Massengut sein kann und auch als Sammelgut bezeichnet wird. Die Umverpackung stellt insbesondere ein Hülle bzw. eine partielle oder vollständige Umhüllung des Stückguts dar, um dieses gegen äußere Einflüsse und Beschädigungen zu schützen. Das Verfahren lässt sich nachgelagert nach einem Auftragseingang zur Kommissionierung und Versendung der Stückgüter sowie ebenso vorgelagert bei Wareneingang und Einsortieren der Stückgüter in ein Lager betreiben, um die einzulagernden Stückgüter mit der Polsterung zu versehen bzw. zur Einlagerung zu rüsten.

In Schritt b) wird bevorzugt geprüft, ob für das jeweilige Stückgut bereits eine Transportkategorie definiert wurde. Dazu können für alle Stückgüter einer Pickliste die Materialdaten, 3D-CAD Daten des Stückguts und sofern vorhanden auch Stammdaten aus der Datenbank geholt werden bzw. in einen Speicher des Computers gesendet werden. Sofern keine 3D-CAD Daten des Stückguts vorhanden sind, können diese durch dreidimensionales Scannen des Stückguts mittels des 3D-Scanners erhalten werden. In den Schritten c) und f) lässt sich grundsätzlich ein beliebiges neuronales Netz verwenden. Das Einsortieren bzw. Auswählen erfolgt durch das selbstlernende System des neuronalen Netzes mittels sogenanntem "Deep Learning (KI)", wobei anfangs noch eine Validierung durch einen Bearbeiter bzw. ein Training des neuronalen Netzes notwendig sein kann. Versuche haben ergeben, dass das neuronale Netz nach Ablauf einer Trainingsphase ein vollautomatisiertes und richtiges Sortieren bzw. Auswählen ermöglicht. Die in Schritt c) erfolgte Kategorisierung wird bevorzugt in der Datenbank gespeichert.

Die Stückgutgruppe in Schritt d) übernimmt bevorzugt konsolidierte Daten der einzelnen Stückgüter. Das Gruppieren der Stückgüter kann über die Transportkategorie oder die Stückgut-ID des Stückguts, bzw. auch Artikel-ID genannt, mandantenspezifisch mit einer Gruppierungsstrategie gesteuert werden. In Schritt g) wird die Stückgütergruppe in der ausgewählten Polsterungsvorlage gemäß der berechneten Stückgüteranordnung virtuell positioniert. Das bedeutet insbesondere, dass das CAD-Modell des Stückguts mit aus den 3D-Daten errechneten Koordinaten und Ausrichtung virtuell in das CAD-Modell der Polsterungsvorlage eingesetzt wird. Insofern sind die Koordinaten und Ausrichtung als Bestandteil der 3D-Daten zu verstehen. Durch Differenz, Schnitt und/oder Vereinigung des CAD-Modells des Stückguts mit dem CAD-Modell der Polsterungsvorlage können Hohlräume für die Stückgüter in die virtuelle Polsterung eingefügt werden. Schließlich wird in Schritt n) die Polsterung aus dem 3D-CAD-Modell der virtuellen Polsterung mittels der Polsterungsmaschine hergestellt. Wenn das Stückgut in die Polsterung eingesetzt ist, liegt diese bevorzugt und/oder zum Teil berührend an dem Stückgut an. Nach Abschluss der Erstellung kann ein Erstellungsauftrag als ausgeführt markiert werden.

Nach einer bevorzugten Weiterbildung umfasst das Verfahren den Schritt:
a) Übertragen eines Kommissionierungsauftrags und/oder einer Einlagerungsliste umfassend das Stückgut oder eine Mehrzahl Stückgüter und insbesondere Lieferdaten für jedes Stückgut und/oder eine Beschriftung für jedes Stückgut, und/oder wobei
Schritt b) ferner das Erhalten von Stammdaten für jedes Stückgut umfasst und die Kategorisierung in Schritt c) anhand der Stammdaten erfolgt, und/oder
die Kategorisierung in Schritt c) in einer Datenbank gespeichert wird.

Mittels Schritt a) kann der Kommissionierungsauftrag bzw. eine Pickliste oder die Einlagerungsliste mit zugehörigen Artikeln, Lieferdaten und individuell anzubringenden Botschaften etc. in den Speicher des Computers gesendet werden.

Grundsätzlich existieren verschiedene Möglichkeiten, um in Schritt e) die Stückgutgruppe in der Umverpackung anzuordnen. Nach einer besonders bevorzugten Weiterbildung umfasst Schritt e) jedoch die Schritte:
e1) Berechnen eines Volumens der Stückgutgruppe hinsichtlich einer Standardgröße der Umverpackung und hinsichtlich einer Portooptimierung basierend auf einer festgelegten Transportstrategie als Vorauswahl der Polsterung,
e2) Prüfen, gegenüber wenigstens einem Grenzwert, ob die Vorauswahl der Polsterung erstellbar ist, insbesondere umfassend ein Erstellen einer Herstellungsreihenfolge der Polsterung in Abhängigkeit von einem verfügbaren Maschinenpark, einer benötigten Zeitdauer, einer Wertigkeit und/oder einer Aufsplittung der Reihenfolge,
e3) Vergleichen der Vorauswahl der Polsterung mit bereits erstellten Anordnungen von Stückgütern mit gleicher Transportkategorie, Anzahl Stückgutgruppen und/oder gesamten oder gemeinsamen Volumen,
e4) Initiales Anordnung des Stückguts in einer Ebene im Rastermaß der Stückgutgruppe, und
e5) Optimieren der initialen Anordnung mittels eines Schwellenakzeptanz-Algorithmus, Sintflut-Algorithmus, Metropolis-Algorithmus, morphologisch, evolutionäre und/oder genetischen Algorithmus zum Erhalten der virtuellen Anordnung.

In Schritt e) erfolgt eine virtuelle Anordnung der Stückgutgruppe in der Umverpackung bevorzugt in mehreren Unterschritten. Zunächst kann in Unterschritt e1) eine Vorauswahl auf Machbarkeit auf Grundlage der festgelegten Transportstrategie erfolgen, wobei eine gegebenenfalls grobe Berechnung der gesamten Volumina der Stückgutgruppe bzw. aller Stückgutgruppen mit den Verpackungszielen Standardgröße und Portooptimierung abgeglichen wird. Der Abgleich erfolgt anhand einer Verfügbarkeit von Standardgrößen und einer Auswahl derselben und ob die Stückgutgruppe in die Standardgröße gut, knapp oder nicht hinein passt. Sofern die Stückgutgruppe nur knapp in die Standardgröße passt, erfolgt bevorzugt eine morpho-genetische Anordnung. Passt die Stückgutgruppe nicht in die Standardgröße, dann kann eine andere Standardgröße oder eine Auftrennung in zwei Picklisten gewählt werden. Ansonsten kann durch eine Portooptimierung geprüft werden, ob der getrennte Versand der Stückgutgruppen mit beispielsweise einer anderen Versandart günstiger ist. Bejahendenfalls kann die Pickliste entsprechend aufgeteilt und neu eingespeist werden.

In Schritt e2) erfolgt eine Berechnung gegen externe und interne Grenzwerte, ob die Polsterung erstellt wird. Dazu kann berechnet werden, ob in der Transportkategorie eine Polsterung notwendig ist. Ferner kann pro Stückgutgruppe abgeglichen werden, ob eine gemeinsame Wertigkeit mit einem gegebenenfalls mandantenspezifischen maximalen Materialwerts der Polsterung der jeweiligen Stückgutgruppe oder der Artikel-ID ausreichend ist. Die gemeinsame Wertigkeit kann zudem mit einer maximalen Zeitdauer des Kommissionierungsvorgangs abgeglichen werden. Zudem kann eine maximale Zeitdauer der Polsterungserstellung in Abhängigkeit vorhandene Polsterungsmaschinen berechnet werden. Schließlich kann eine maximale Zeitdauer des Kommissionierungsvorgangs mit Anzahl Polsterungen berechnet werden.

In Unterschritt e3) wird ein Abgleich mit bereits erstellten Anordnungen mit gleichen Transportkategorien, Anzahl Stückgutgruppen, und gesamten oder gemeinsamen Volumen durchgeführt. In Unterschritt e4) können Stückgutgruppen mit gemeinsamen Prioritätsobjekten und/oder gemeinsamer Zugänglichkeit bevorzugt einer obersten Ebene zugeordnet werden, während Stückgutgruppen mit dem größten gemeinsamen Gewicht der untersten Ebene zugeordnet werden.

Schließlich erfolgt in Unterschritt e5) bevorzugt eine Berechnung der Anordnung innerhalb eines Rastermaßes von beispielsweise 30ccm, 15ccm oder 7,5ccm durch heuristische Optimierungsalgorithmen der "Simulierten Abkühlung" wie beispielsweise Schwellenakzeptanz, Sintflutalgorithmus oder Metropolisalgorithmus, anhand des gemeinsames Volumens der Stückgutgruppen und gemeinsamen Transportkategorie und/oder innerhalb einer Stückgutgruppe anhand des Volumengrundkörper und äußere Volumenmaße des Stückguts, durch morphologische oder evolutionäre/genetische Algorithmen anhand des CAD-Modell der Stückgutgruppen und/oder anhand des CAD-Modell der Stückguts. Während erstgenannte Algorithmen-Gruppe vorteilig bei einfachen Formen, losem Stückgut bzw. Fächersystematik und Boden-Deckel-Schalen ist, ist zweitgenannte Algorithmen-Gruppe vorteilig bei demgegenüber komplexeren Formen. Durch die Algorithmen lässt sich iterativ eine optimale Lösung bestimmen, wobei Schleifen zwischen Stückgüter-Anordnung innerhalb einer Gruppe und Anordnung der Stückgüter-Gruppen durchlaufen werden können.

In bevorzugter Weiterbildung erfolgt das Auswählen in Schritt f) anhand einer Transportstrategie, eines verfügbaren Maschinenparks, einer Individualisierungsstrategie und/oder eines Kommissionierungsauftrags und/oder einer Einlagerungsliste. Nach einer weiteren bevorzugten Ausgestaltung umfasst das Verfahren den Schritt h) Anpassen des 3D-CAD-Modells der virtuellen Polsterung hinsichtlich einer Individualisierungsstrategie des Stückguts, insbesondere ausgewählt aus einer Oberflächen-Veredelung, einer Beschriftung, einer Codierung und/oder einer elektronischen Schaltung auf der Polsterung. Die derart erzeugte Individualisierung kann durch einen Eindruck in die Polsterung bei einem 3D-Drucker und/oder nachgelagerten Aufdruck auf der Oberfläche der Polsterung bzw. Integration in das 3D-CAD-Modell erreicht werden. Beispielsweise kann die Polsterung durch Oberflächen-Veredelung, wie Textur, Relief und Farbe, Botschaften, wie Bilder, Grafiken, Texte und personalisierte Texte, Codierungen, wie Barcode, QR-Code, Zahlencodes, Seriennummer, oder elektronische Schaltungen, wie Funkelektronik, Sensorelektronik, Verplombungselektronik individualisiert werden.

Nach einer anderen bevorzugten Weiterbildung umfasst das Verfahren den Schritt i) Erzeugen eines maschinenfähigen 3D-CAD-Modells für die Polsterungsmaschine aus dem 3D-CAD-Modell der virtuellen Polsterung, insbesondere durch Entfernen von Fehlern, Löchern, nicht benötigter Zwischenschritte und/oder nicht verbundenen Vertices, und Speichern des 3D-CAD-Modells der virtuellen Polsterung in einer Datenbank. Das erzeugte 3D-CAD-Modell der virtuellen Polsterung wird durch diesen Schritt beispielsweise für den Kommissionierungsauftrag von Fehlern, Löchern und nicht verbundenen Vertices bereinigt und maschinenfähig aufbereitet, beispielsweise durch Löschen nicht mehr notwendiger Daten der Zwischenschritte. Das maschinenfähige 3D-CAD-Modell für die Polsterungsmaschine wird bevorzugt in der Datenbank gespeichert oder in den Speicher des Computers zur Erstellung der Polsterung gesendet. Die virtuelle Kommissionierung der Polsterung und die physikalische Erstellung der Polsterung kann an einem gleichen Ort oder räumlich entfernt vorgesehen sein. Eine Übertragung eines Druckauftrags über die Pickliste bzw. Wareneingangsliste kann auf Abruf on-demand oder durch Zuruf Push erfolgen. Entsprechend können auch eine Mehrzahl unabhängiger Computer und/oder Datenbanken zur Ausführung des Verfahrens vorgesehen sein, die räumlich entfernt über das Internet drahtlos oder drahtgebunden miteinander verbunden sind.

In einer anderen bevorzugten Weiterbildung umfasst das Verfahren den Schritt j) Erhalten eines Auftrags zum Herstellen der Polsterung als Teil eines Kommissionierungsauftrags und/oder einer Einlagerungsliste und Abrufen des zu dem Auftrag korrespondierenden 3D-CAD-Modells der virtuellen Polsterung aus der Datenbank, k) Erstellen einer Auftragsliste der anzufertigenden Polsterungen und Zuordnen von Stückgut-IDs zu den anzufertigenden Polsterungen, insbesondere in Abhängigkeit von einem verfügbaren Maschinenpark, einer benötigten Zeitdauer, einer Wertigkeit und/oder einer Aufsplittung der Reihenfolge, 1) Hinzufügen der Stückgut-ID zu dem 3D-CAD-Modell der virtuellen Polsterung, und/oder m) Übertragen des 3D-CAD-Modells der virtuellen Polsterung an die Polsterungsmaschine.

In Schritt j) können ein oder mehrere Druckaufträge, insbesondere die Pickliste/Wareneingangsliste, mit den zugehörigen Artikeln, Lieferdaten und individuell anzubringenden Botschaften etc. in den Speicher des Computers als Auftrag gesendet werden und aus der Datenbank die zugehörigen 3D-CAD-Daten der Polsterung in den Speicher geladen werden. In Schritt k) können den zu erstellenden Polsterungen Artikel-IDs zugeordnet werden, die in die Pickliste oder Rüstanweisungen für die Polsterungsmaschine integriert werden. In Schritt 1) kann eine Polsterungsmaschinen-spezifische Anpassung der 3D-CAD-Modell der Polsterung erfolgen, um die Artikel-ID der Polsterung dem 3D-CAD-Modell der Polsterung hinzuzufügen. Je nach Art der Polsterung kann diese Artikel-ID als individuell anzubringende Botschaft auf der Polsterung angebracht werden. Schließlich kann in Schritt m) das 3D-CAD-Modell der Polsterung an die zugeordnete Polsterungsmaschine oder schrittweise an die Polsterungsmaschine in den Speicher übertragen werden.

Nach einer noch anderen bevorzugten Weiterbildung umfasst das Verfahren den Schritt: o) Einsetzen der Polsterung in die Umverpackung und des Stückguts in die Polsterung und Verschließen der Umverpackung mittels einer Verpackungsmaschine, oder o") Einsetzen des Stückguts in die Polsterung, Einlagern des in die Polsterung eingesetzten Stückguts, Auslagern des in die Polsterung eingesetzten Stückguts, Einsetzen des in die Polsterung eingesetzten Stückguts in die Umverpackung und/oder und Verschließen der Umverpackung mittels einer Verpackungsmaschine, und insbesondere p) Übergeben der verschlossenen Umverpackung an einen Logistikdienstleister zum Ausliefern an einen Empfänger des Stückguts. Die Pickliste oder Rüstanweisungen für den Wareneingang können um die Artikel-ID der erstellten Polsterung erweitert und an ein Lagerhaus-System gesendet werden.

Grundsätzlich kann die Polsterungsmaschine beliebig ausgestaltet sein. Nach einer besonders bevorzugten Ausgestaltung ist die Polsterungsmaschine jedoch als 3D-Drucker, Zuschneider, Cutter, Presse, Stanze, Thermoformer und/oder Kartonfaltmaschine ausgeführt.

Nachfolgend wird die Erfindung unter Bezugnahme auf die anliegenden Zeichnungen im Detail näher erläutert.

Es zeigen
- Figs. 1a bis 1d: eine Prozessansicht eines Verfahrens zum Herstellen einer Polsterung nach einem bevorzugten Ausführungsbeispiel der Erfindung,
- Fig. 2: eine Systemansicht eines Systems zum Ausführen des Verfahrens gemäß Figs. 1a bis 1d, und
- Fig. 3: eine schematische Ansicht eines mittels des Verfahrens gemäß Figs. 1a bis 1d hergestellte Polsterung zum Transportieren eines Stückguts in einer Umverpackung.

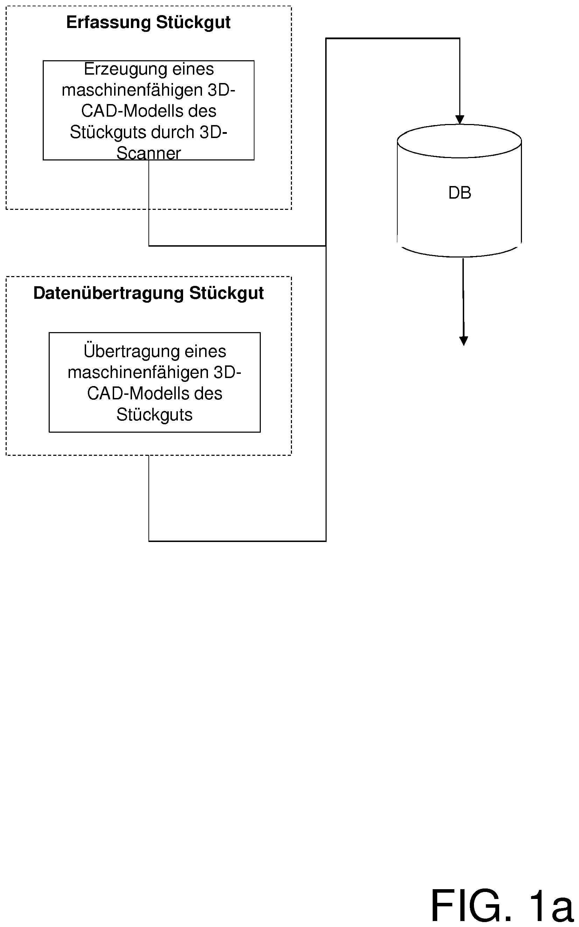

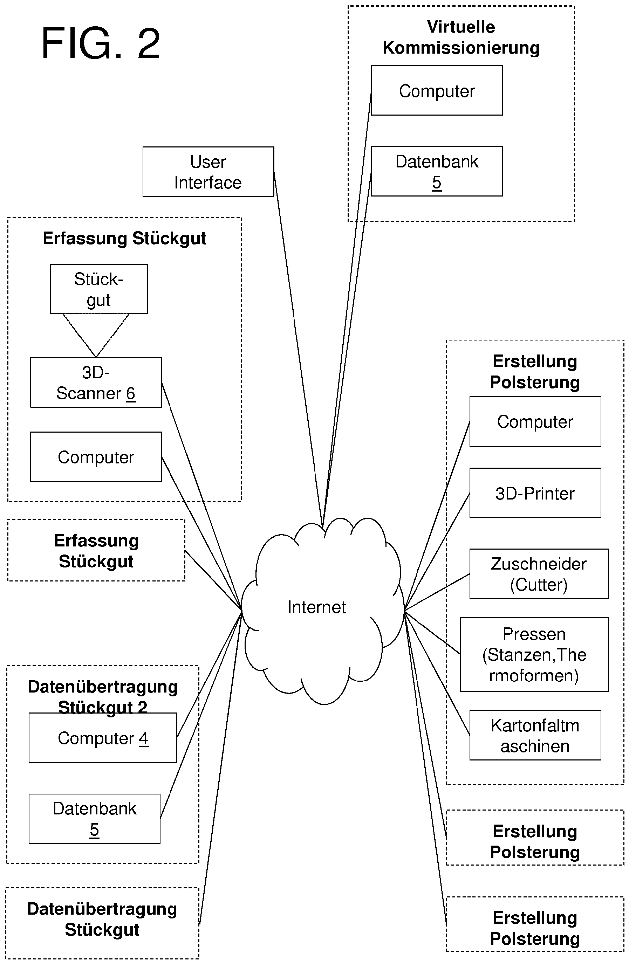

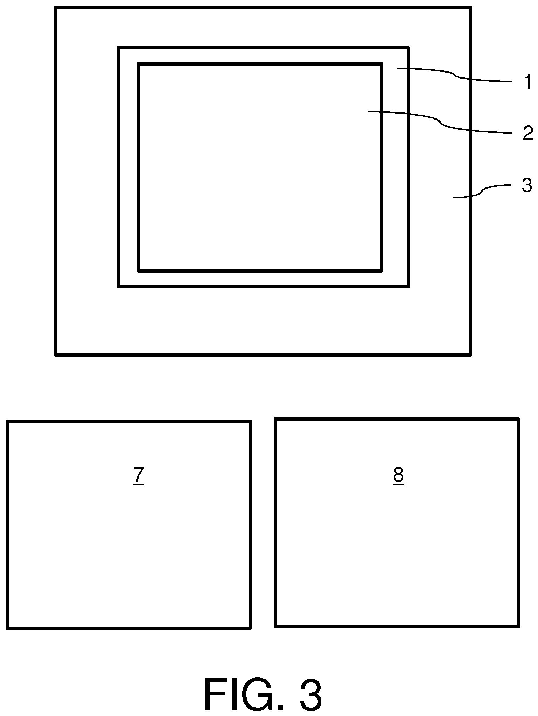

Figs. 1a bis 1d zeigen eine Prozessansicht eines Verfahrens zum Herstellen einer Polsterung 1 zum Transportieren eines Stückguts 2 in einer Umverpackung 3 nach einem bevorzugten Ausführungsbeispiel der Erfindung. Eine Systemansicht eines Systems zum Ausführen des Verfahrens gemäß Figs. 1a bis 1d ist in Fig. 2 dargestellt, während Fig. 3 die mittels des Verfahrens gemäß Figs. 1a bis 1d hergestellte Polsterung 1 zum Transportieren des Stückguts 2 in der Umverpackung 3 zeigt.

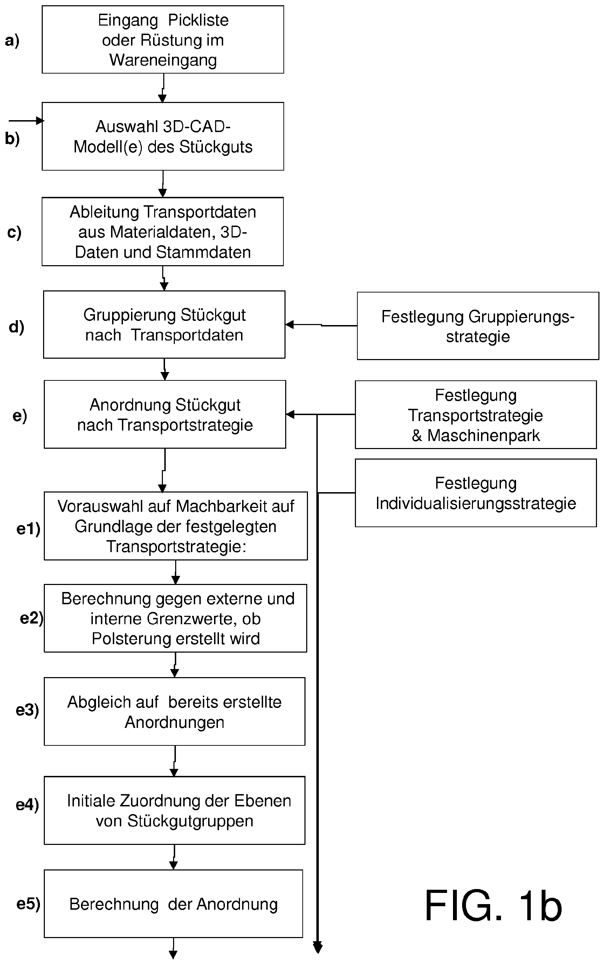

In einem ersten Schritt a), dargestellt in Fig. 1b, wird zunächst ein Kommissionierungsauftrag und/oder eine Einlagerungsliste umfassend das Stückgut 2 oder eine Mehrzahl Stückgüter 2 und insbesondere Lieferdaten für jedes Stückgut 2 und/oder eine Beschriftung für jedes Stückgut 2 an einen Computer 4 übertragen. Dabei kann die Polsterung 1 bei Kommissionierung bzw. bei einem Auftrag zum Versand erstellt werden oder die Polsterung 1 wird bei Einlagerung erstellt bzw. bei Wareneingang und Einlagerung.

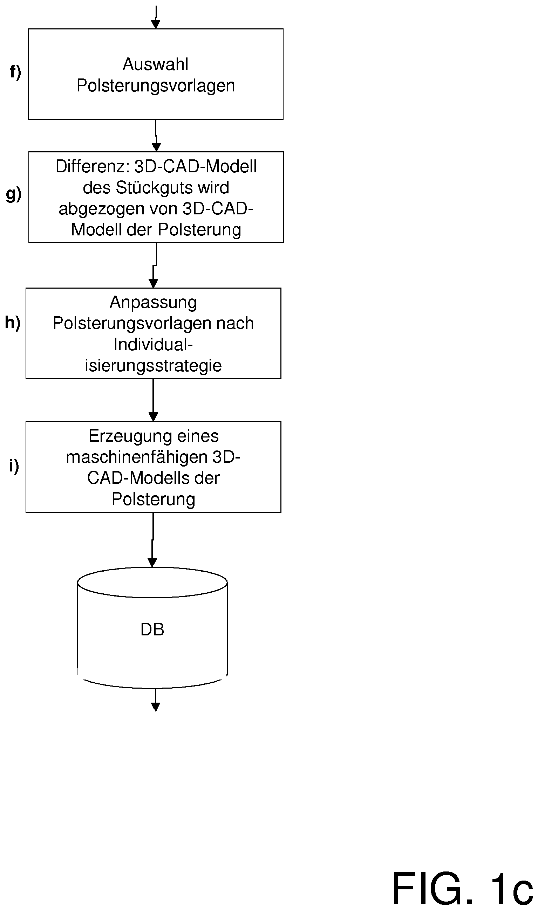

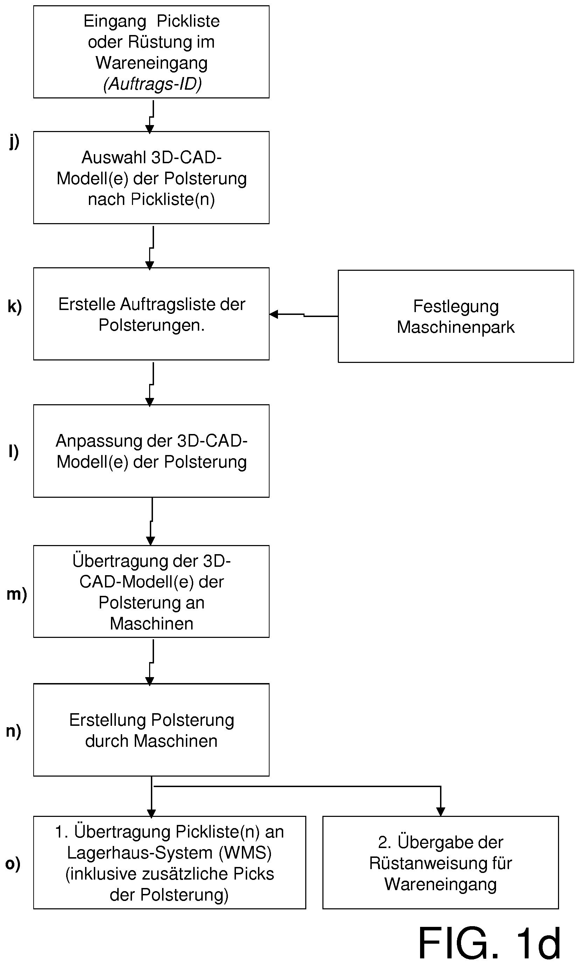

Im darauffolgenden Schritt b) werden 3D-Daten eines 3D- Modells und Materialdaten für jedes Stückgut 2 durch Übertragen aus einer Datenbank 5 und/oder durch dreidimensionales Scannen des Stückguts 2 mittels eines 3D-Scanners 6 bestimmt, wie in Fig. 1 a ersichtlich. Die 3D-Daten eines 3D-CAD-Modells und Materialdaten für das Stückgut 2 können von einem Hersteller des Stückguts 2 bezogen und in der Datenbank 5 gespeichert werden. Die 3D-Daten des Stückguts 2 stellen ein Datenobjekt dar und umfassen äußere Volumenmaße des Stückguts 2, wie Breite, Länge, Höhe oder Kubik-Zentimeter, Volumengrundkörper, wie Kegel, Zylinder, Keil, Kugel, Rechteck oder Pyramide, ein 3D-CAD-Modell des Stückguts 2 und/oder segmentierte Gliedmaße des 3D-CAD-Modells des Stückguts 2. Die Materialdaten des Stückguts 2 stellen ebenso ein Datenobjekt dar und umfassen Metadaten wie Wertigkeit/Betrag und/oder Artikel-ID, die aus einem Barcode etc. generiert sein kann und gleichlautend zu Stückgut-ID verwendet wird, und Materialdaten wie Gefahrstoff, Gefahrstoff-Kategorie bzw. Gefahrenbezeichnung, CMR-Stoffe und Kategorie, Zerbrechlichkeit, Gesamtgewicht, Flüssigkeitsanteil, Temperaturvorgabe, Viskosität, Konsistenz und/oder Feldstärke.

In Schritt c) erfolgt ein Einsortieren des Stückguts 2 mittels eines ersten neuronalen Netzes in eine sofern bereits bestehende Transportkategorie oder anderseits in eine zu erstellende Transportkategorie, wobei eine Kategorisierung durch das erste neuronale Netzwerk anhand der 3D-Daten, der Materialdaten sowie, sofern vorhanden, anhand von Stammdaten des Stückguts 2 erfolgt. Die Stammdaten stellen ein weiteres Datenobjekt des Stückguts 2 dar und umfassen Informationen zu Gefahrstoff, Gefahrstoff-Kategorie wie Gefahrenbezeichnung, CMR-Stoffe, Gesamtgewicht, Temperaturvorgabe, Mindesthaltbarkeitsdatum, Herstellungsdatum, Wertigkeit und/oder Produktgattung. Im Falle von Stammdaten umfasst Schritt b) ferner das Erhalten der Stammdaten für jedes Stückgut 2. Die in Schritt c) erfolgte Kategorisierung wird in der Datenbank 5 oder in einer weiteren Datenbank gespeichert. Die Transportkategorie stellt ein weiteres Datenobjekt dar und umfasst in entsprechender Weise die Eigenschaften Gefahrgut, Gefahrgutklasse, Gefahrgutklassen-Unterkategorie, Gewichtsschutz, Benötigt Stoßfestigkeit, aufrecht stehend, Fixierung, Kritische Gliedmaße, Feuchtigkeitsschutz, Aufsaugendes Zusatzmaterial, Zieltemperatur, loses Stückgut, Faltbar, Bereits gepolstert, Bereits in Umverpackung und/oder Wertigkeit. Das Einsortieren bzw. Klassifizieren des Stückguts 2 Klassifikationen in die Transportkategorie geschieht durch das selbstlernende System des ersten neuronalen Netzes mittels sogenannten "Deep Learning (KI)". Anfangs kann noch eine Validierung durch einen Bearbeiter bzw. ein Training des neuronalen Netzes notwendig sein, wobei nach Ablauf einer Trainingsphase ein automatisiertes Sortieren erfolgt.

Im darauffolgenden Schritt d) wird das Stückgut 2 in eine Stückgutgruppe anhand der Transportkategorie und/oder einer Stückgut-ID gruppiert, wobei die Kriterien zum Gruppieren zudem Prioritätsobjekte, Gruppenobjekte, Hauptobjekt, Nebenobjekte, Zugänglichkeit, Sichtbarkeit, Negativobjekte wie beispielsweise Gefahrgut und/oder Transportkategorie wie beispielsweise loses Stückgut oder Wertigkeit als gegebenenfalls mandantenspezifische Gruppierungsstrategie umfassen können. Insofern kann die Gruppierung beispielsweise anhand der Zugehörigkeit eines Kabels zu einer Stereoanlage erfolgen. Die Stückgutgruppe stellt ein Datenobjekt dar und umfasst in entsprechender Weise die Eigenschaften Artikel-ID des Hauptobjektes, Artikel-ID der gegebenenfalls mehreren Nebenobjekte, Name der gemeinsamen Transportkategorie, Betrag der gemeinsame Wertigkeit, gemeinsame Zugänglichkeit, gemeinsame Prioritätsobjekte, gemeinsames Gewicht und/oder gemeinsames Volumen.

In Schritt e) erfolgt ein virtuelles Anordnen der Stückgutgruppe in der Umverpackung anhand der Transportstrategie. Dazu wird in einem ersten Unterschritt e1) zunächst ein Volumen der Stückgutgruppe hinsichtlich einer Standardgröße der Umverpackung 3 und hinsichtlich einer Portooptimierung basierend auf einer festgelegten Transportstrategie als Vorauswahl der Polsterung berechnet, um eine Vorauswahl auf Machbarkeit auf Grundlage der festgelegten Transportstrategie zu treffen. Die Transportstrategie stellt ein gegebenenfalls mandantenspezifisches Datenobjekt dar und umfasst die Eigenschaften Verpackungsziel wie Standardgröße, Mehrwegverpackung, recycle-fähige Polsterung, Portooptimierung und/oder Versandart sowie die Zuordnungen von Verpackungsnamen und deren Volumen, sowie Zuordnungen zu den vorhandenen Transportkategorien mit bevorzugter Versandart wie beispielsweise Warensendung, Buchsendung, Express, mit definierter Individualisierung wie beispielswese Seriennummer, Grußwort, mit gesetzter maximaler Zeitdauer einer Polsterungserstellung, mit gesetzter maximaler Zeitdauer eines Kommissionierungsvorgangs und/oder mit gesetzter maximaler Materialwert der Polsterung.

Im zweiten Unterschritt e2) wird, gegenüber wenigstens einem Grenzwert, geprüft, ob die Vorauswahl der Polsterung erstellbar ist, insbesondere umfassend ein Erstellen einer Herstellungsreihenfolge der Polsterung in Abhängigkeit von einem verfügbaren Maschinenpark, einer benötigten Zeitdauer, einer Wertigkeit und/oder einer Aufsplittung der Reihenfolge gegebenenfalls in mehrere Druckaufträge. Der Maschinenpark der Polsterungsmaschinen 7 umfasst beispielsweise und gegebenenfalls mehrere 3D-Printer, Zuschneider, Pressen, Kartonfaltmaschinen und/oder Spritzgießmaschinen.

In Unterschritt e3) wird verglichen, ob für die Vorauswahl der Polsterung bereits Anordnungen von Stückgütern 2 mit gleicher Transportkategorie, Anzahl Stückgutgruppen und/oder gesamten oder gemeinsamen Volumen erstellt worden sind. Da ein Berechnen der Anordnung rechenintensiv ist, wird vorher nach bekannten Anordnungen gesucht. In Unterschritt e4) erfolgt ein initiales Anordnen des Stückguts in einer Ebene im Rastermaß der Stückgutgruppe. Anschließend in Unterschritt e5) findet ein Optimieren der initialen Anordnung mittels eines Schwellenakzeptanz-Algorithmus, Sintflut-Algorithmus, Metropolis-Algorithmus, morphologisch, evolutionäre und/oder genetischen Algorithmus zum Erhalten der virtuellen Anordnung statt.

Die Kriterien zum virtuellen Anordnung der Stückgutgruppen in Schritt e) umfassen somit beispielsweise die Anzahl Stückgutgruppen, eine grobe Berechnung über Volumen versus Transportstrategie und Verpackungsziel, eine gemeinsame Wertigkeit versus Transportstrategie und Grenzwerte, vorhandene Polsterungsmaschinen 7 versus Transportstrategie und Grenzwerte, und/oder eine initiale Zuordnung einer Ebene wie beispielsweise obere Ebenen insbesondere für gemeinsame Prioritätsobjekte und/oder gemeinsame Zugänglichkeit, und untere Ebenen insbesondere größtes gemeinsames Gewicht.

Mit anderen Worten umfassen die Anordnungsmethoden bzw. -algorithmen zunächst die Frage, ob Vorlagen nach gemeinsamer Transportkategorie und Anzahl Stückgutgruppen vorhanden sind. Anderenfalls erfolgt eine Anpassung der Vorlage oder Neuberechnung durch Rastermaß-Logik durch heuristische Optimierungsalgorithmen der "Simulierten Abkühlung" wie Schwellenakzeptanz, Sintflut-Algorithmus, Metropolis-Algorithmus. Ebenso kann anhand von Materialdaten und Abmessungen geprüft werden, ob einfache Grundformen vorhanden sind, um beispielsweise loses Stückgut oder Spezialgut wie Lebensmittel in Fächer zu legen oder Präsentationsschalen beispielsweise für Schuhe vorzusehen. Bei der Berechnung der Anordnung wird durch morphologische oder evolutionäre/genetische Algorithmen wird geprüft, ob komplexe Formen vorhanden sind, ob ein Grobvolumen des Stückguts 2 nahe an der Porto grenze ist etc. Die Anordnung des Stückguts ist ebenso ein Datenobjekt und umfasst die Eigenschaften Rastermaß-Logik, gegebenenfalls mehrere vertikale Ebenen, gegebenenfalls mehrere horizontale Ebenen mit gegebenenfalls mehrere Stückgutgruppen, berechnete Anordnung des Gesamtvolumens, der gegebenenfalls mehreren Stückgutgruppen und/oder Koordinaten und Ausrichtung der 3D-CAD-Modelle des Stückguts 2.

In Schritt f) erfolgt ein Auswählen eines 3D-CAD-Modells einer Polsterungsvorlage für die Stückgutgruppe mittels eines zweiten neuronalen Netzes anhand der in Schritt e) erstellten virtuellen Anordnung. Dabei erfolgt das Auswählen anhand der zuvor bestimmten Transportstrategie, des verfügbaren Maschinenpark, einer Individualisierungsstrategie und/oder eines Kommissionierungsauftrags und/oder einer Einlagerungsliste. Die Individualisierungsstrategie stellt ein Datenobjekt dar und umfasst Informationen zu einer Oberfläche der Polsterung je nach Transportkategorie, Veredelung wie beispielsweise Texturen, Farbe oder Relief, gegebenenfalls auf die Polsterung aufgedruckte Botschaften wie Texte, Bilder/Grafiken, Codierungen, Barcode wie QR-Code, Zahlen, beispielsweise Seriennummern, Order-ID, Tracking-Code, oder Funkcodes wie beispielsweise NFC. Ebenso wie bei dem ersten neuronalen Netzes geschieht das Auswählen durch das selbstlernende System des zweiten neuronalen Netzes mittels sogenannten "Deep Learning (KI)". Die Validierung kann anfangs ebenso durch einen Bearbeiter erfolgen bzw. ein Training des neuronalen Netzes kann notwendig sein. Nach Ablauf einer Trainingsphase erfolgt ein automatisiertes Auswählen. Die Polsterungsvorlage stellt wiederum ein Datenobjekt dar, welches die Eigenschaften 3D-CAD-Modell der Polsterungsvorlage, Bereiche für Individualisierung/Botschaften und/oder mögliche Art der Individualisierung/Botschaften aufweist. Die Individualisierungsstrategie, Gruppierungsstrategie und die Transportstrategie sind mandantenspezifisch über ein Benutzerinterface/User Interface eines Computers oder einer Webseite erstellbar und anpassbar.

Im darauffolgenden Schritt g) wird eine Differenz, ein Schnitt und/oder eine Vereinigung zwischen der virtuellen Anordnung der Stückgutgruppe in dem ausgewählten 3D-CAD-Modell der Polsterungsvorlage, dem 3D-CAD-Modells des Stückguts sowie Koordinaten und Ausrichtung des 3D-Modells des Stückguts und dem 3D-CAD-Modell der ausgewählten Polsterungsvorlage als 3D-CAD-Modell einer virtuellen Polsterung bestimmt. Die Bestimmung der Differenz erfolgt, je Polsterung bzw. Stückgutgruppe, basierend auf dem 3D-CAD-Modell der Polsterungsvorlage, der Stückgutgruppe gegebenenfalls mit Stückgutgruppe-ID, dem 3D-CAD-Modell des Stückguts 2 sowie der Koordinaten und Ausrichtung der 3D-CAD-Modells des Stückguts 2.

In Schritt h) wird das 3D-CAD-Modell der virtuellen Polsterung hinsichtlich der Individualisierungsstrategie des Stückguts 2, ausgewählt aus einer Oberflächen-Veredelung, einer Beschriftung, einer Codierung und/oder einer elektronischen Schaltung des Stückguts, angepasst. Zudem können Botschaften in das 3D-CAD-Modell der virtuellen Polsterung eingefügt werden. Die 3D-CAD-Daten der virtuellen Polsterung umfassen, je Polsterung bzw. Stückgutgruppe, Informationen zum Volumengrundkörper wie beispielsweise Kegel, Zylinder, Keil, Kugel, Rechteck, Pyramide, zu äußeren Volumenmaße wie beispielsweise Breite, Länge, Höhe, Kubik-Zentimeter, das 3D-CAD-Modell der dementsprechend angepassten Polsterung sowie, sofern vorhanden, zu Individualisierungsbotschaften.

Im darauffolgenden Schritt i) wird ein maschinenfähiges 3D-CAD-Modell für die Polsterungsmaschine 7 aus dem 3D-CAD-Modell der virtuellen Polsterung erzeugt, insbesondere durch Entfernen von Fehlern, Löchern, nicht benötigter Zwischenschritte und/oder nicht verbundenen Vertices, und Speichern des 3D-CAD-Modells der virtuellen Polsterung in der Datenbank 5 und/oder einer weiteren Datenbank. Mit anderen Worten wird das 3D-CAD-Modell der virtuellen Polsterung von Fehlern bereinigt und anschließend beispielsweise datenreduziert durch Entfernen nicht mehr benötigter Zwischenschritte. In Schritt j) wird ein Auftrag zum Herstellen der Polsterung als Teil eines Kommissionierungsauftrags und/oder einer Einlagerungsliste und Abrufen des zu dem Auftrag korrespondierenden 3D-CAD-Modells der virtuellen Polsterung aus der Datenbank 5 erhalten. Der Auftrag kann durch eine Pickliste oder Rüstung im Wareneingang erfolgen.

In Schritt k) wird eine Auftragsliste der anzufertigenden Polsterungen erstellt und Stückgut-IDs zu den anzufertigenden Polsterungen insbesondere in Abhängigkeit von dem verfügbaren Maschinenpark, der benötigten Zeitdauer, der Wertigkeit und/oder der Aufsplittung der Reihenfolge zugeordnet. Im darauffolgenden Schritt 1) wird die Stückgut-ID zu dem 3D-CAD-Modell der virtuellen Polsterung hinzugefügt, um das 3D-CAD-Modell der Polsterung anzupassen. Durch Schritt m) wird das derart erstellte 3D-CAD-Modell der virtuellen Polsterung an die Polsterungsmaschine 7 übertragen, beispielsweise via Internet, Netzwerk, drahtlos und/oder drahtgebunden. In Schritt n) wird die Polsterung aus dem 3D-CAD-Modell der virtuellen Polsterung 1 mittels der Polsterungsmaschine 7 erstellt. Wie zuvor beschrieben, kann die Polsterungsmaschine 7 als 3D-Drucker, Zuschneider, Cutter, Presse, Stanze, Thermoformer und/oder Kartonfaltmaschine ausgeführt sein.

Nachdem die Polsterung 1 erstellt ist, wird diese in Schritt o') entweder in die Umverpackung 3 und das Stückgut 2 in die erstellte Polsterung 1 eingesetzt. Mittels einer Verpackungsmaschine 8 wird die Umverpackung 3 verschlossen. Alternativ wird in Schritt o") das Stückgut 2 in die erstellte Polsterung 1 eingesetzt und das in die Polsterung 1 eingesetzten Stückgut 2 eingelagert. Nach einem Auslagern des in die Polsterung 1 eingesetzten Stückguts 2 wird dieses in die Umverpackung 3 eingesetzt und die Umverpackung 3 mittels der Verpackungsmaschine 8 verschlossen. Schließlich wird in Schritt p) die verschlossene Umverpackung 3 an einen Logistikdienstleister übergeben, damit das Stückgut 2 an einen Empfänger desselben ausgeliefert werden kann.

**Bezugszeichenliste**

| | |
|---|---|
| Polsterung | 1 |
| Stückgut | 2 |
| Umverpackung | 3 |
| Computer | 4 |
| Datenbank | 5 |
| 3D-Scanner | 6 |
| Polsterungsmaschine | 7 |
| Verpackungsmaschine | 8 |

## Patentansprüche

1. Verfahren zum Herstellen einer Polsterung (1) zum Transportieren eines Stückguts (2) in einer Umverpackung (3), mit den durch einen Computer (4), einen 3D-Scanner (6) und/oder eine Polsterungsmaschine (7) ausgeführten Schritten:
b) Erhalten von 3D-Daten eines 3D-CAD-Modells und Materialdaten für jedes Stückgut (2) durch Übertragen aus einer Datenbank (5) mittels des Computers (4) und/oder mittels der Polsterungsmaschine (7) und/oder durch dreidimensionales Scannen des Stückguts mittels des 3D-Scanners (6),
c) Einsortieren des Stückguts (2) mittels eines ersten neuronalen Netzes in eine sofern bereits bestehende Transportkategorie oder anderseits in eine zu erstellende Transportkategorie mittels des Computers (4) und/oder mittels der Polsterungsmaschine (7), wobei eine Kategorisierung durch das erste neuronale Netzwerk anhand der 3D-Daten und der Materialdaten erfolgt,
d) Gruppieren des Stückguts in eine Stückgutgruppe anhand der Transportkategorie und/oder einer Stückgut-ID mittels des Computers (4) und/oder mittels der Polsterungsmaschine (7),
e) Virtuelles Anordnen der Stückgutgruppe in der Umverpackung (3) mittels des Computers (4) und/oder mittels der Polsterungsmaschine (7),
e1) Berechnen eines Volumens der Stückgutgruppe hinsichtlich einer Standardgröße der Umverpackung (3) und hinsichtlich einer Portooptimierung basierend auf einer festgelegten Transportstrategie als Vorauswahl der Polsterung (1) mittels des Computers (4) und/oder mittels der Polsterungsmaschine (7),
e2) Prüfen, gegenüber wenigstens einem Grenzwert, ob die Vorauswahl der Polsterung (1) erstellbar ist, insbesondere umfassend ein Erstellen einer Herstellungsreihenfolge der Polsterung (1) in Abhängigkeit von einem verfügbaren Maschinenpark, einer benötigten Zeitdauer, einer Wertigkeit und/oder einer Aufsplittung der Reihenfolge mittels des Computers (4) und/oder mittels der Polsterungsmaschine (7),
e3) Vergleichen der Vorauswahl der Polsterung (1) mit bereits erstellten Anordnungen von Stückgütern mit gleicher Transportkategorie, Anzahl Stückgutgruppen und/oder gesamten oder gemeinsamen Volumen mittels des Computers (4) und/oder mittels der Polsterungsmaschine (7),
f) Auswählen eines 3D-CAD-Modells einer Polsterungsvorlage für die Stückgutgruppe mittels eines zweiten neuronalen Netzes anhand der Transportkategorie und der virtuellen Anordnung mittels des Computers (4) und/oder mittels der Polsterungsmaschine (7),
g) Berechnen einer Differenz, eines Schnitts und/oder einer Vereinigung zwischen der virtuellen Anordnung der Stückgutgruppe in dem ausgewählten 3D-CAD-Modell der Polsterungsvorlage, dem 3D-CAD-Modells des Stückguts sowie der Koordinaten und Ausrichtung des 3D-CAD-Modells des Stückguts und dem 3D-CAD-Modell der ausgewählten Polsterungsvorlage als 3D-CAD-Modell einer virtuellen Polsterung mittels des Computers (4) und/oder mittels der Polsterungsmaschine (7),
n) Herstellen der Polsterung (1) aus dem 3D-CAD-Modell der virtuellen Polsterung mittels der Polsterungsmaschine (7).

2. Verfahren nach dem vorhergehenden Anspruch, mit dem Schritt:
a) Übertragen eines Kommissionierungsauftrags und/oder einer Einlagerungsliste umfassend das Stückgut (2) oder eine Mehrzahl Stückgüter (2) und insbesondere Lieferdaten für jedes Stückgut (2) und/oder eine Beschriftung für jedes Stückgut (2), und/oder wobei
Schritt b) ferner das Erhalten von Stammdaten für jedes Stückgut (2) umfasst und die Kategorisierung in Schritt c) anhand der Stammdaten erfolgt, und/oder
die Kategorisierung in Schritt c) in der Datenbank (5) gespeichert wird.

3. Verfahren nach einem der vorhergehenden Ansprüche, wobei der Schritt e) ferner umfasst:
e4) Initiales Anordnung des Stückguts (2) in einer Ebene im Rastermaß der Stückgutgruppe, und
e5) Optimieren der initialen Anordnung mittels eines Schwellenakzeptanz-Algorithmus, Sintflut-Algorithmus, Metropolis-Algorithmus, morphologisch, evolutionäre und/oder genetischen Algorithmus zum Erhalten der virtuellen Anordnung.

4. Verfahren nach einem der vorhergehenden Ansprüche, wobei das Auswählen in Schritt f) anhand einer Transportstrategie, eines verfügbaren Maschinenpark, einer Individualisierungsstrategie und/oder eines Kommissionierungsauftrags und/oder einer Einlagerungsliste erfolgt.

5. Verfahren nach einem der vorhergehenden Ansprüche, mit dem Schritt:
h) Anpassen des 3D-CAD-Modells der virtuellen Polsterung hinsichtlich einer Individualisierungsstrategie des Stückguts (2), insbesondere ausgewählt aus einer Oberflächen-Veredelung, einer Beschriftung, einer Codierung und/oder einer elektronischen Schaltung auf der Polsterung (1).

6. Verfahren nach einem der vorhergehenden Ansprüche, mit dem Schritt:
i) Erzeugen eines maschinenfähigen 3D-CAD-Modells für die Polsterungsmaschine (7) aus dem 3D-CAD-Modell der virtuellen Polsterung, insbesondere durch Entfernen von Fehlern, Löchern, nicht benötigter Zwischenschritte und/oder nicht verbundenen Vertices, und Speichern des 3D-CAD-Modells der virtuellen Polsterung in der Datenbank (5).

7. Verfahren nach dem vorhergehenden Anspruch, mit dem Schritt:
j) Erhalten eines Auftrags zum Herstellen der Polsterung (1) als Teil eines Kommissionierungsauftrags und/oder einer Einlagerungsliste und Abrufen des zu dem Auftrag korrespondierenden 3D-CAD-Modells der virtuellen Polsterung aus der Datenbank (5).

8. Verfahren nach dem vorhergehenden Anspruch, mit dem Schritt:
k) Erstellen einer Auftragsliste der anzufertigenden Polsterungen (1) und Zuordnen von Stückgut-IDs zu den anzufertigenden Polsterungen (1), insbesondere in Abhängigkeit von einem verfügbaren Maschinenpark, einer benötigten Zeitdauer, einer Wertigkeit und/oder einer Aufsplittung der Reihenfolge,
l) Hinzufügen der Stückgut-ID zu dem 3D-CAD-Modell der virtuellen Polsterung, und/oder
m) Übertragen des 3D-CAD-Modells der virtuellen Polsterung an die Polsterungsmaschine (7).

9. Verfahren nach einem der vorhergehenden Ansprüche, mit dem Schritt:
o) Einsetzen der Polsterung (1) in die Umverpackung (3) und des Stückguts (2) in die Polsterung (1) und Verschließen der Umverpackung (3) mittels einer Verpackungsmaschine (8), oder
o") Einsetzen des Stückguts (2) in die Polsterung (1), Einlagern des in die Polsterung (1) eingesetzten Stückguts (2), Auslagern des in die Polsterung (1) eingesetzten Stückguts (2), Einsetzen des in die Polsterung (1) eingesetzten Stückguts (2) in die Umverpackung (3) und/oder und Verschließen der Umverpackung (3) mittels der Verpackungsmaschine (8), und insbesondere
p) Übergeben der verschlossenen Umverpackung (3) an einen Logistikdienstleister zum Ausliefern an einen Empfänger des Stückguts (2).

10. Verfahren nach einem der vorhergehenden Ansprüche, wobei die Polsterungsmaschine (7) als 3D-Drucker, Zuschneider, Cutter, Presse, Stanze, Thermoformer und/oder Kartonfaltmaschine ausgeführt ist.

## Claims

1. Method for producing a padding (1) for transporting general cargo (2) in an outer packaging (3), comprising the steps performed by a computer (4), a 3D scanner (6) and/or a padding machine (7):
b) obtaining 3D data of a 3D CAD model and material data for each piece of general cargo (2) by transmitting them from a database (5) by means of the computer (4) and/or by means of the padding machine (7) and/or by three-dimensional scanning the pieces of general cargo by use of the 3D scanner (6);
c) sorting the pieces of general cargo (2) by means of a first neural network into an already existing transport category, if applicable, or otherwise into a transport category to be created by means of the computer (4) and/or by means of the padding machine (7), wherein a categorization is done by the first neural network based on the 3D data and the material data;
d) grouping the pieces of general cargo into a general cargo group based on the transport category and/or a general cargo ID by means of the computer (4) and/or by means of the padding machine (7);
e) virtually arranging the general cargo group in the outer packaging (3) by means of the computer (4) and/or by means of the padding machine (7);
e1) calculating a volume of the general cargo group with regard to a standard size of the outer packaging (3) and with regard to postage optimization based on a defined transport strategy as a preselection of the padding (1) by means of the computer (4) and/or by means of the padding machine (7);
e2) checking, compared to at least one threshold, as to whether the preselection of the padding (1) can be created, in particular comprising creating a production sequence for the padding (1) depending on the available machinery, a required period of time, a value and/or a split of the sequence by means of the computer (4) and/or by means of the padding machine (7);
e3) comparing the preselection of the padding (1) with already created arrangements of general cargo with the same transport category, number of general cargo groups and/or total or common volume by means of the computer (4) and/or by means of the padding machine (7);
f) selecting a 3D CAD model of a padding template for the general cargo group by means of a second neural network based on the transport category and the virtual arrangement by means of the computer (4) and/or by means of the padding machine (7);
g) calculating a difference, an average and/or a unification between the virtual arrangement of the general cargo group in the selected 3D CAD model of the padding template, the 3D CAD model of the general cargo and the coordinates and alignment of the 3D CAD model of the general cargo and the 3D CAD model of the selected padding template as a 3D CAD model of a virtual padding by means of the computer (4) and/or by means of the padding machine (7); and
n) producing the padding (1) from the 3D CAD model of the virtual padding by means of the padding machine (7).

2. Method according to the preceding claim, comprising the step:
a) transmitting a commissioning order and/or a depository list comprising the general cargo (2) or a plurality of pieces of general cargo (2) and in particular delivery data for each piece of general cargo (2) and/or a label for each piece of general cargo (2), and/or wherein
step b) further comprises obtaining master data for each piece of general cargo (2) and the categorization in step c) takes place on the basis of the master data, and/or
the categorization in step c) is stored in the database (5).

3. Method according to any one of the preceding claims, wherein step e) further comprises:
e4) initially arranging the general cargo (2) in a plane in the grid dimension of the general cargo group; and
e5) optimizing the initial arrangement by means of a threshold acceptance algorithm, great deluge algorithm, Metropolis algorithm, morphological, evolutionary and/or genetic algorithm for obtaining the virtual arrangement.

4. Method according to any one of the preceding claims, wherein the selection in step f) takes place on the basis of a transport strategy, an available machine park, an individualization strategy and/or a commissioning order and/or a depository list.

5. Method according to any one of the preceding claims, comprising the step:
h) adapting the 3D CAD model of the virtual padding with regard to an individualization strategy for the general cargo (2), in particular selected from a surface finishing, a labelling, a coding and/or an electronic circuit on the padding (1).

6. Method according to any one of the preceding claims, comprising the step:
i) generating a machine-compatible 3D CAD model for the padding machine (7) from the 3D CAD model of the virtual padding, in particular by removing errors, holes, unnecessary intermediate steps and/or unconnected vertices, and storing the 3D CAD model of the virtual padding in the database (5).

7. Method according to the preceding claim, comprising the step:
j) obtaining an order for producing the padding (1) as part of a commissioning order and/or a depository list and retrieving the 3D CAD model of the virtual padding corresponding to the order from the database (5).

8. Method according to the preceding claim, comprising the step:
k) creating an order list of the paddings (1) to be manufactured and assigning general cargo IDs to the padding (1) to be manufactured, in particular depending on the available machinery, a required period of time, a value and/or a split in the sequence;
I) adding the general cargo ID to the 3D CAD model of the virtual padding; and/or
m) transmitting the 3D CAD model of the virtual padding to the padding machine (7).

9. Method according to any one of the preceding claims, comprising the step:
o) inserting the padding (1) into the outer packaging (3) and the general cargo (2) into the padding (1) and closing the outer packaging (3) by means of a packaging machine (8); or
o") inserting the general cargo (2) in the padding (1), depositing the general cargo (2) inserted into the padding (1), taking the general cargo (2) inserted into the padding (1) out of store, inserting the general cargo (2) inserted into the padding (1) in the outer packaging (3) and/or closing the outer packaging (3) by means of the packaging machine (8); and in particular
p) handing over the closed outer packaging (3) to a logistics service provider for delivery to a recipient of the general cargo (2).

10. Method according to any one of the preceding claims, wherein the padding machine (7) is configured as a 3D printer, a tailoring means, a cutter, a press, a punch, a thermoformer and/or a cardboard folding machine.

## Revendications

1. Procédé de fabrication d'un garnissage (1) pour le transport d'un article (2) dans un emballage extérieur (3), avec les étapes exécutées par un ordinateur (4), un scanner en 3D (6) et/ou une machine de garnissage (7) :
b) l'obtention de données en 3D d'un modèle CAO en 3D et de données de matériaux pour chaque article (2) par la saisie à partir d'une banque de données (5), au moyen d'un ordinateur (4), et/ou au moyen de la machine de garnissage (7), et/ou par un balayage tridimensionnel de l'article au moyen d'un scanner 3D (6),
c) le classement de l'article (2) au moyen d'un premier réseau neuronal dans une catégorie de transport déjà existante ou autrement dans une catégorie de transport à créer, au moyen de l'ordinateur (4), et/ou au moyen de la machine de garnissage (7), où un classement par catégorie a lieu par le premier réseau neuronal à l'aide des données en 3D et des données des matériaux,
d) le regroupement de l'article dans un groupe d'articles à l'aide de la catégorie de transport et/ou d'un identifiant d'article ID au moyen de l'ordinateur (4), et/ou au moyen de la machine de garnissage (7),
e) l'arrangement virtuel du groupe d'articles dans l'emballage extérieur (3) au moyen de l'ordinateur (4) et/ou au moyen de la machine de garnissage (7),
e1) le calcul d'un volume du groupe d'articles en fonction d'une taille standard de l'emballage extérieur (3) et en fonction d'une optimisation de l'affranchissement en se basant sur une stratégie de transport définie servant de sélection préalable du garnissage (1) au moyen de l'ordinateur (4) et/ou au moyen de la machine de garnissage (7),
e2) la vérification, par rapport à au moins une valeur limite, si la sélection préalable du garnissage (1) est réalisable, notamment la réalisation d'un ordre de classement dans la fabrication du garnissage (1) en fonction d'un parc de machines disponibles, d'une durée nécessaire, d'une valeur et/ou d'une subdivision de l'ordre de classement au moyen de l'ordinateur (4) et/ou au moyen de la machine de garnissage (7),
e3) la comparaison de la sélection préalable du garnissage (1) avec des ensembles déjà fabriqués d'articles de la même catégorie de transport, du même nombre de groupes d'articles et/ou de même volume total ou commun, au moyen de l'ordinateur (4) et/ou au moyen de la machine de garnissage (7),
f) la sélection d'un modèle CAO en 3D d'un modèle de garnissage pour le groupe d'articles au moyen d'un deuxième réseau neuronal à l'aide de la catégorie de transport et de l'arrangement virtuel au moyen de l'ordinateur (4) et/ou au moyen de la machine de garnissage (7),
g) le calcul d'une différence, d'une section et/ou d'un assemblage entre l'arrangement virtuel du groupe d'articles dans le modèle CAO en 3D sélectionné du modèle proposé de garnissage, du modèle CAO en 3D de l'article ainsi que des coordonnées et de l'orientation du modèle CAO en 3D de l'article et du modèle CAO en 3D du modèle proposé de garnissage sélectionné, en tant que modèle CAO en 3D d'un garnissage virtuel au moyen de l'ordinateur (4) et/ou au moyen de la machine de garnissage (7),
n) la fabrication du garnissage (1) à partir du modèle CAO en 3D du garnissage virtuel au moyen de la machine de garnissage (7).

2. Procédé selon la revendication précédente, avec l'étape :
a) de saisie d'un ordre de préparation de commande et/ou d'une liste de stockage comprenant l'article (2) ou une multiplicité d'articles (2) et notamment des dates de livraison pour chaque article (2), et/ou d'une notice pour chaque article (2), et/ou dans lequel
l'étape b) comprend en outre l'obtention de données d'origine pour chaque article (2) et le classement par catégorie dans l'étape c) a lieu à l'aide des données d'origine, et/ou
le classement par catégorie dans l'étape c) est enregistré dans la banque de données (5).

3. Procédé selon l'une des revendications précédentes, dans lequel l'étape c) comprend en outre :
e4) une disposition initiale de l'article (2) dans un plan dans la trame du groupe d'articles, et
e5) une optimisation de l'arrangement initial au moyen d'un algorithme d'acceptation de seuil, d'un algorithme de déluge, d'un algorithme de métropolis, d'un algorithme morphologique, évolutionnaire et/ou génétique pour l'obtention de l'arrangement virtuel.

4. Procédé selon l'une des revendications précédentes, dans lequel la sélection dans l'étape f) a lieu à l'aide d'une stratégie de transport, d'un parc de machines disponibles, d'une stratégie d'individualisation, et/ou d'un ordre de préparation de commande, et/ou d'une liste de stockage.

5. Procédé selon l'une des revendications précédentes, avec l'étape :
h) d'adaptation du modèle CAO en 3D au garnissage virtuel en ce qui concerne une stratégie d'individualisation de l'article (2), notamment choisi parmi un anoblissement de surface, une inscription, un codage et/ou une commutation électronique sur le garnissage (1).

6. Procédé selon l'une des revendications précédentes, avec l'étape :
i) de création d'un modèle CAO en 3D compatible avec la machine pour la machine de garnissage (7) à partir du modèle CAO en 3D du garnissage virtuel, notamment par le retrait d'erreurs, de trous, d'étapes intermédiaires non nécessaires et/ou de sommets non reliés, et d'enregistrement du modèle CAO en 3D du garnissage virtuel dans la banque de données (5).

7. Procédé selon l'une des revendications précédentes, avec l'étape :
j) d'obtention d'une commande pour la fabrication du garnissage (1) sous forme d'une partie d'un ordre de préparation de commande et/ou d'une liste de stockage et d'accès au modèle CAO en 3D du garnissage virtuel correspondant à la commande à partir de la banque de données (5).

8. Procédé selon l'une des revendications précédentes, avec l'étape :
k) d'établissement d'une liste de commande des garnissages (1) à fabriquer et d'attribution d'identifiants de pièces ID aux garnissages (1) à fabriquer, notamment en fonction d'un parc de machines disponibles, d'une durée nécessaire, d'une valeur et/ou d'une subdivision de l'ordre de classement,
l) d'ajout de l'ID de pièce au modèle CAO en 3D du garnissage virtuel, et/ou
m) de transposition du modèle CAO en 3D du garnissage virtuel sur la machine de garnissage (7).

9. Procédé selon l'une des revendications précédentes, avec l'étape :
o) d'insertion du garnissage (1) dans l'emballage extérieur (3) et de l'article (2) dans le garnissage (1) et de fermeture de l'emballage extérieur (3) au moyen d'une machine d'emballage (8), ou
o") d'insertion de l'article (2) dans le garnissage (1), d'entreposage de l'article (2) inséré dans le garnissage (1), de prélèvement de l'article (2) inséré dans le garnissage (1), d'insertion de l'article (2) inséré dans le garnissage (1) dans l'emballage extérieur (3), et/ou de fermeture de l'emballage extérieur (3) au moyen de la machine d'emballage (8), et en particulier,
p) de remise de l'emballage extérieur (3) fermé à un fournisseur de services de logistique pour la livraison de l'article (2) à un réceptionnaire.

10. Procédé selon l'une des revendications précédentes, dans lequel la machine de garnissage (7) est conçue sous forme d'une imprimante en 3D, d'un dispositif de découpe, d'un outil de coupe, d'une presse, d'une presse à emboutir, d'une thermoformeuse et/ou d'une machine de pliage de carton.
